# EUROPEAN PATENT SPECIFICATION

(11) **EP 3 912 391 B1**
(45) Date of publication and mention of the grant of the patent: **06.08.2025**
(21) Application number: 19700698.4
(22) Date of filing: 14.01.2019
(51) Int. Cl.: H04W 36/12

(54) **APPARATUS, METHOD & COMPUTER PROGRAM**
VORRICHTUNG, VERFAHREN UND COMPUTERPROGRAMM
APPAREIL, PROCÉDÉ ET PROGRAMME INFORMATIQUE

(43) Date of publication of application: 24.11.2021
(73) Proprietor: Nokia Technologies Oy, 02610 Espoo (FI)
(72) Inventor: LANDAIS, Bruno, 22560 Pleumeur-Bodou (FR); THIEBAUT, Laurent, 92160 Antony (FR)
(74) Representative: Script Intellectual Property LLP
(86) International application number: PCT/EP2019/050823
(87) International publication number: WO 2020/147919

(56) References cited:
- EP-A1- 3 606 120
- "3rd Generation Partnership Project; Technical Specification Group Services and System Aspects; Procedures for the 5G System; Stage 2 (Release 15)", 7 January 2019 (2019-01-07), XP051686576, Retrieved from the Internet <URL:http://www.3gpp.org/ftp/3guInternal/3GPP%5Fultimate%5Fversions%5Fto%5Fbe%5Ftransposed/sentToDpc/23502%2Df41%2Ezip> [retrieved on 20190107]
- CATT: "TS 23.502: Discussion on EPS bearer ID allocation during inter-RAT handover from 5GS to EPS", vol. SA WG2, no. Busan, Korea; 20170327 - 20170331, 21 March 2017 (2017-03-21), XP051257731, Retrieved from the Internet <URL:http://www.3gpp.org/ftp/tsg_sa/WG2_Arch/TSGS2_120_Busan/Docs/> [retrieved on 20170321]
- ZTE: "23.502 P-CR Discussion and proposal on EBI management, exhaustion and relocation", vol. SA WG2, no. Ljubljana, Slovenia; 20171023 - 20171027, 22 October 2017 (2017-10-22), XP051347068, Retrieved from the Internet <URL:http://www.3gpp.org/ftp/Meetings_3GPP_SYNC/SA2/Docs/> [retrieved on 20171022]
- "3rd Generation Partnership Project; Technical Specification Group Services and System Aspects; Procedures for the 5G System; Stage 2 (Release 15)", 22 September 2017 (2017-09-22), XP051359409, Retrieved from the Internet <URL:http://www.3gpp.org/ftp/tsg_sa/WG2_Arch/Latest_SA2_Specs/Latest_draft_S2_Specs/> [retrieved on 20170922]
- ZTE: "TS 23.501 P-CR to Discussion and proposal on the UE and network behaviour for SR only mode UE", vol. SA WG2, no. Hangzhou, China; 20170515 - 20170519, 14 May 2017 (2017-05-14), XP051281962, Retrieved from the Internet <URL:http://www.3gpp.org/ftp/Meetings_3GPP_SYNC/SA2/Docs/> [retrieved on 20170514]
- "3rd Generation Partnership Project; Technical Specification Group Services and System Aspects; System Architecture for the 5G System; Stage 2 (Release 15)", 28 September 2017 (2017-09-28), XP051359415, Retrieved from the Internet <URL:http://www.3gpp.org/ftp/tsg_sa/WG2_Arch/Latest_SA2_Specs/Latest_draft_S2_Specs/> [retrieved on 20170928]

## Description

### Field of the disclosure

The present disclosure relates to apparatuses, methods and a computer program for establishing a data connection supporting interworking between a first radio access technology system and a second radio access technology system.

### Background

A communication system can be seen as a facility that enables communication sessions between two or more entities such as user terminals, base stations/access points and/or other nodes by providing carriers between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet. In a wireless communication system at least a part of a communication session between at least two stations occurs over a wireless link.

A user can access the communication system by means of an appropriate communication device or terminal. A communication device of a user is often referred to as user equipment (UE) or user device. A communication device is provided with an appropriate signal receiving and transmitting apparatus for enabling communications, for example enabling access to a communication network or communications directly with other users. The communication device may access a carrier provided by a station or access point, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Another example of an architecture that is known as the long-term evolution (LTE) of the Universal Mobile Telecommunications System (UMTS) radio-access technology. Another example communication system is so called 5G radio or new radio (NR) access technology.

EP3606120 discloses a method and device for allocating an EPS bearer identifier. The method includes mapping a session/connection to an EPS bearer and requesting a UE or an AMF to allocate an EPS bearer identifier to a mapped EPS bearer.

3GPP; Technical Specification Group Services and System Aspects; Procedures for the 5G system; stage 2 Release 15; 3GPP draft; 23502-F41, 7 Jan 2019 discloses that the AMF may assign EBIs (BPS bearer identifier) and that these may be sent to the SMF.

CATT TS23.502: Discussion on EPS bearer ID allocation during inter-RAT handover from 5GS to EPS, 3GPP draft; S2-172175_TS23.502 EPS Bearer ID ALLOCATION FOR INTER-RAT HANDOVER; F-06921 Vol SA WG2, no. Busan, Korea 20170327-20170331 21 March 2017 discusses a 5GS handover procedure and notes that the procedure does not clearly describe how to map a PDU session to a PDN connection. It discusses which entities need to know the EPS bearer information and which entity allocates EPS bearer ID.

SA WG" Meeting #123, 23 - 27 October 2017, 23.502 P-CR Discussion and proposal on EBI management , exhaustion and relocation S2-177112. It discloses that EBI is allocated by the AMF and looks at how to minimise session management behaviours in the AMF and how to resolve EBI exhaustion.

### Summary

According to an aspect there is provided an apparatus according to claim 1.

According to an aspect there is provided a method according to claim 11

According to an aspect there is provided a computer program comprising computer executable code which when run on at least one processor is configured to perform **the** steps of the method of claim 11.

According to an aspect there is provided an apparatus according to claim 5.

According to an aspect there is provided a method according to claim 12.

According to an aspect there is provided a computer program comprising computer executable code which when run on at least one processor is configured to perform the steps in the method of claim 12.

In the above, many different aspects have been described. It should be appreciated that further aspects may be provided by the combination of any two or more of the aspects described above.

Various other aspects are also described in the following detailed description and in the attached claims.

### List of abbreviations

- AUSF:: Authentication Server Function
- ARP:: Allocation Retention priority
- AMF:: Access Management Function
- CN:: Core Network
- DNN:: Data Network Name
- EBI:: EPS bearer identifier
- EIR:: Equipment Identity Register
- EPS:: Evolved Packet System
- EPC:: Evolved Packet Core
- GSM:: Global System for Mobile communication
- H-PCF:: Home PLMN PCF
- H-SMF:: Home PLMN SMF
- H-UPF:: Home PLMN UPF
- IE:: Information Element
- LBO:: Local Breakout
- LTE:: Long Term Evolution
- NG:: Next Generation
- MAC:: Medium Access Control
- MS:: Mobile Station
- MTC:: Machine Type Communication
- N3IWF:: N3 interworking function
- NAS:: Non-Access Stratum
- PCF:: Policy Control Function
- PDU:: Packet Data Unit
- PDN:: Packet Data Network
- PLMN:: Public Land Mobile Network
- RAM:: Random Access Memory
- RAN:: Radio Access Network
- ROM:: Read Only Memory
- SM:: Session Management
- SMF:: Session Management Function
- S-NSSAI:: Single Network Slice Selection Assistance Information
- TS:: Technical Specification
- UDM:: User Data Management
- UE:: User Equipment
- UMTS:: Universal Mobile Telecommunication System
- UPF:: User Plane Function
- USB:: Universal Serial Bus
- V-PCF:: Visited PLMN PCF
- V-SMF:: Visited PLMN SMF
- V-UPF:: Visited PLMN UPF
- 3G:: 3^{rd} Generation
- 3GPP:: 3^{rd} Generation Partnership Project
- 5G:: 5^{th} Generation
- 5GC:: 5G Core network
- 5GS:: 5G System

### Technical specifications

One or more of the following aspects relate to the following technical specifications, the content of which is incorporated herein by reference.
3GPP TS23.502
3GPP TS29.503
3GPP TS29.518
3GPP TS29.571

### Brief Description of the Figures

Embodiments will now be described, by way of example only, with reference to the accompanying Figures in which:
Figure 1 shows a schematic representation of a communication system;
Figure 2 shows a schematic representation of a control apparatus;
Figure 3 shows a schematic representation of a user equipment;
Figures 4 and 5 show a schematic representation of a diagram of a data connection establishment procedure for a home routed roaming data connection according to 3GPP TS 23.502;
Figures 6 and 7 show a schematic representation of a diagram of a registration procedure according to an aspect;
Figures 8 and 9 show a schematic representation of a diagram of data connection establishment procedure for a home routed roaming data connection according to an aspect;
Figures 10 and 11 show a schematic representation of a diagram of data connection establishment procedure for a non-roaming data connection or a local breakout roaming data connection according to an aspect;
Figure 12 show a schematic representation of a diagram of a method performed by a first function, such as an access management function, according to an aspect;
Figure 13 show a schematic representation of a diagram of a method performed by a second function, such as session management function, according to an aspect;
Figure 14 shows a schematic representation of a non-volatile memory medium storing instructions which when executed by a processor allow a processor to perform one or more of the steps of the method of any of Figures 4 to 13; and
Figures 15 and 16 show a schematic representation of a diagram of a method of performing an EPS bearer ID allocation procedure in accordance with proposed modifications to 3GPP TS23.502.

### Detailed Description of the Figures

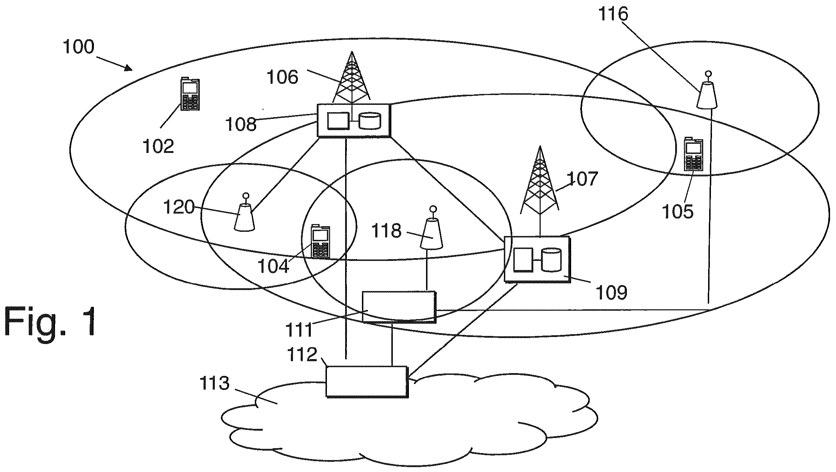

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1 to 5 to assist in understanding the technology underlying the described examples.

Figure 1 illustrates an example of a wireless communication system 100. The wireless communication system 100 comprises wireless communication devices 102, 104, 105. The wireless communication devices 102, 104, 105 are provided wireless access via at least one base station 106 and 107 or similar wireless transmitting and/or receiving node or point. The base stations may be evolved node Bs (eNB), next generation node Bs (gNBs) or other. Base stations 106 and 107 are typically controlled by at least one appropriate control apparatus. The controller apparatus may be part of the base stations 106 and 107.

Base stations 106 and 107 are connected to a wider communications network 113 via gateway 112. A further gateway function may be provided to connect to another network.

Base stations 116, 118 and 120 associated with smaller cells may also be connected to the network 113, for example by a separate gateway function and/or via the macro level stations. The base stations 116, 118 and 120 may be pico or femto level base stations or the like. In the example, base stations 116 and 118 are connected via a gateway 111 whilst base station 120 connects via the base station 106. In some embodiments, the smaller base stations 116, 118 and 120 may not be provided.

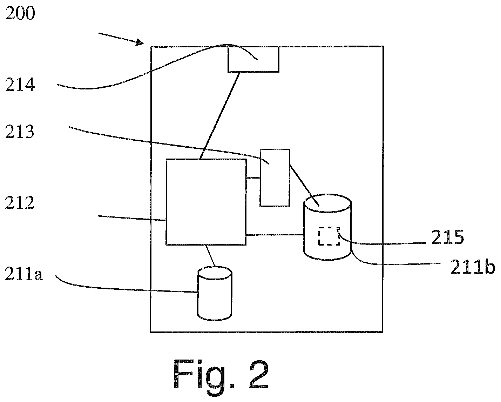

Figure 2 illustrates an example of a control apparatus 200, for example to be integrated with, coupled to and/or otherwise for controlling a base station, such as the base stations 106, 107, 116, 118 or 120 shown on Figure 1. The control apparatus 200 can be arranged to allow communications between a user equipment and a core network. For this purpose the control apparatus comprises at least one random access memory (RAM) 211a and at least on read only memory (ROM) 211b, at least one processor 212, 213 and an input/output interface 214. The at least one processor 212, 213 is coupled to the RAM 211a and the ROM 211b. Via the interface the control apparatus 200 can be coupled to relevant other components of the base station. The at least one processor 212, 213 may be configured to execute an appropriate software code 215 to implement one or more of the following aspects. The software code 215 may be stored in the ROM 211b.

It shall be appreciated that similar components can be provided in a control apparatus provided elsewhere in the network system, for example in a core network (CN) entity or function.

The control apparatus 200 can be interconnected with other control entities. The control apparatus 200 and functions may be distributed between several control units. In some embodiments, each base station can comprise a control apparatus. In alternative embodiments, two or more base stations may share a control apparatus.

Base stations and associated controllers may communicate with each other via a fixed line connection and/or via a radio interface. The logical connection between the base stations can be provided for example by an X2 or the like interface. This interface can be used for example for coordination of operation of the base stations and performing reselection or handover operations.

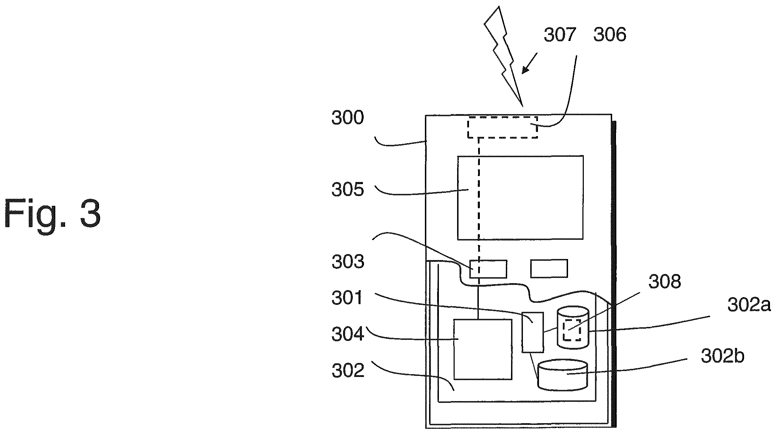

Figure 3 illustrates an example of a user equipment or wireless communication device 300, such as the wireless communication device 102, 104 or 105 shown on Figure 1. The wireless communication device 300 may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, machine-type communications (MTC) devices, IoT type communication devices or any combinations of these or the like. A device may provide, for example, communication of data for carrying communications. The communications may be one or more of voice, electronic mail (email), text message, multimedia, data, machine data and so on.

The device 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The wireless communication device 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 211a and the ROM 211b. The at least one processor 301 may be configured to execute an appropriate software code 308 to implement one or more of the following aspects. The software code 308 may be stored in the ROM 211b.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

One or more of the following aspects more specifically relate to interworking between a 5G system (5GS - defined in 3GPP TS 23.501) and evolved packet core network or system (EPS - defined in 3GPP TS 23.401). However, it will be understood that some of these aspects may be transposed to other radio access technology systems.

This interworking between 5GS and EPS assumes the possibility (upon UE mobility between 5GS and EPS) to move data connections (called "Packet Data Unit (PDU) Sessions" in 5GS and "Packet Data Network (PDN) connections" in EPC) between 5GS and EPS. A PDU Session is a data connection between a terminal and a data network. The data network may be identified by a (DNN) Data Network Name.

EPS differentiates traffic within a PDN connection by so-called "bearers" carrying traffic that share the same quality of service (QoS) requirements over the EPS. These bearers may be identified by respective EPS Bearer Identifier (EBIs) within the EPS.

Mobility between 5GS to EPS assumes that 5GS allocates EBI(s) for traffic that may later on be moved to EPS (regardless of whether mobility to EPS would actually take place later on). For data connections that may later on be moved to EPS, EBI allocation may take place at the establishment of the data connection. Generally, only one EBI is needed at the establishment of the data connections but in some specific cases more than one EBI may be needed. Currently EBI allocation is done by an access management function (AMF) under request of a session management function (SMF). EBI allocation may not be needed for data connections not eligible for mobility between 5GS and EPS. The SMF may be the entity that determines (e.g. based on the target DNN of the data connections) whether a data connection is eligible for mobility between 5GS and EPS and how many EBI(s) are needed at data connection establishment. An allocated EBI may be associated with an allocation retention priority (ARP) of the traffic exchanged over the corresponding EPS bearer. The procedures for EBI allocation are defined in 3GPP TS 23.502 (see section 4.11.1.4).

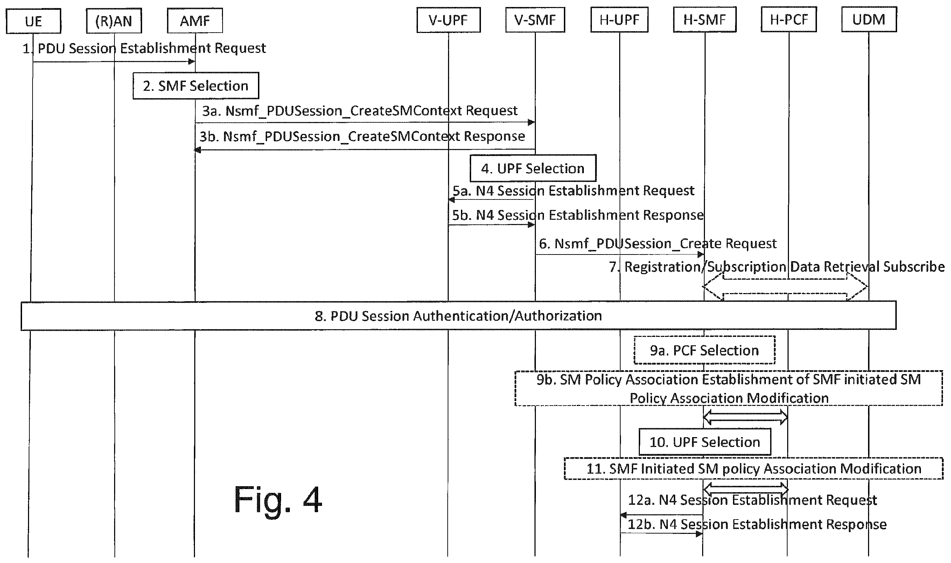

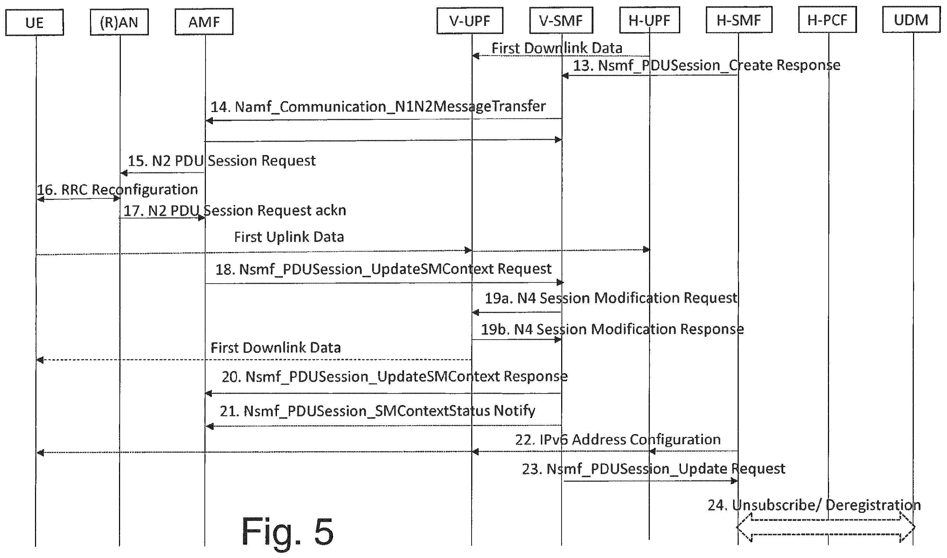

Figures 4 and 5 show a schematic representation of a diagram of a data connection establishment procedure for a home routed roaming data connection according to section 4.3.2.2.2 of 3GPP TS 23.502. The following steps are discussed in details in section 4.3.2.2.2 of 3GPP TS 23.502 and therefore are merely listed hereafter for the sake of conciseness.

In step 1, a UE may send a PDU Session Establishment Request to an AMF via a radio access network (RAN).

In step 2, the AMF may select an SMF. More specifically, the AMF may select a V-SMF, that is the SMF of a visited public land mobile network (PLMN).

In step 3a, the AMF may send an Nsmf_PDUSession_CreateSMContext Request to the V-SMF.

In step 3b, the V-SMF may send an Nsmf_PDUSession_CreateSMContext response to the AMF.

In step 4, the V-SMF may select a user plane function (UPF). More specifically, the V-SMF may select V-UPF, the UPF of the visited PLMN.

In step 5a, the V-SMF may sends an N4 Session Establishment Request to the V-UPF.

In step 5b, the V-UPF may send an N4 Session Establishment Response to the V-SMF.

In step 6, the V-SMF may send an Nsmf_PDUSession_Create Request to a H-SMF, the SMF of the home PLMN.

In step 7, the H-SMF may retrieve session management (SM) subscription data from a user data management (UDM).

In step 8, the H-SMF may perform PDU session authentication/authorization.

In step 9a, the H-SMF may select a policy control function (PCF). More specifically, the H-PCF may select the PCF of the home PLMN.

In step 9b, the H-SMF may perform SM association establishment or SMF initiated SM policy association modification.

In step 10, the H-SMF may select a user plane function (UPF). More specifically, the H-UPF may select the UPF of the home PLMN.

In step 11, the H-SMF may perform SMF initiated SM policy association modification.

In step 12a, the H-SMF may send an N4 Session Establishment Request to the H-UPF.

In step 12b, the H-UPF may send an N4 Session Establishment response to the H-SMF.

In step 13, the H-SMF may send an Nsmf_PDUSession_Create Response to the V-SMF.

In step 14, the V-SMF may send a Namf_Communication_N1N2MessageTransfer message to the AMF.

In step 15, the AMF may send a N2 PDU session request to the RAN.

In step 16, the UE and the RAN may perform RRC reconfiguration.

In step 17, the RAN may send an N2 PDU session request acknowledgement to the AMF.

In step 18, the AMF may send an Nsmf_PDUSession_UpdateSMContext Request to the V-SMF.

In step 19a, the V-SMF may send an N4 Session Modification Request to the V-UPF.

In step 19b, the V-UPF may send an N4 Session Modification Response to the V-SMF.

In step 20, the V-SMF may send an Nsmf_PDUSession_UpdateSMContext Response to the AMF.

In step 21, the V-SMF may send an Nsmf_PDUSession_SMContextStatusNotify message to the AMF.

In step 22, the H-SMF may generate an IPv6 Router Advertisement and send it to the UE via N4 and the H-UPF and V-UPF.

In step 23, the H-SMF may unsubscribe to the modifications of session management subscription data for the DNN and the S-NSSAI for the PDU session. The SMF may deregister for the PDU session.

The above procedure is a home routed roaming scenario because the SMF controlling the PDU Session and the UPF interfacing the DN are in the home PLMN. The V-SMF controls the local user plane resources.

In the above procedure, the V-SMF requests the H-SMF for the creation of the PDU Session at step 6 and the H-SMF answers at step 13. The H-SMF would need to retrieve the allocated EBI before step 13 in order to transfer the allocated EBI to the UE via steps 13 to 16. However, the EBI allocation is currently expected to be done via the V-SMF context of the PDU Session (H-SMF initiated Nsmf_ PDUSession_Update operation) using a procedure defined in 3GPP TS 23.502 V15.4.1 Figure 4.11.1.4.1-1 which is not represented in the call flow. This H-SMF initiated Nsmf_ PDUSession_Update operation cannot actually be done before the H-SMF returns the Nsmf_PDUSession_Create response in step 13. Therefore the H-SMF cannot retrieve the allocated EBI before step 13. Therefore, the above procedure is incorrect and cannot work.

For information, the procedure for EBI allocation is defined in 3GPPTS 23.502 Figure 4.11.1.4.1-1 whose step 2 reads: *"If the PGW-C+SMF (or H-SMF in case of home routed case), determines, e.g. based on operator policies, S-NSSAI, User Plane Security Enforcement information, that EPS bearer ID(s) needs to be assigned to the QoS flow(s) in the PDU Session, PGW-C+SMF invokes Namf_Communication_EBIAssignment Request (PDU Session ID, ARP list) (via V-SMF Nsmf_PDUSession_Update in case of home routed case). When V-SMF receives Nsmf_PDUSession_Update request from H-SMF for EPS bearer ID allocation request, V-SMF needs to invoke Namf_Communication_EBIAssignment Request (PDU Session ID, ARP list). If the PGW-C+SMF (or H-SMF in case of home-routed roaming) serves multiple PDU sessions for the same DNN but different S-NSSAIs for a UE then the SMF shall only request EBIs for PDU sessions served by a common UPF (PSA). In case different UPF (PSA) are serving those PDU sessions, then the SMF chooses one of the UPF (PSA) for this determination based on operator policy".*

This means the current stage 2 call flow and specification is not consistent and cannot be implemented at stage 3 protocol level.

Furthermore, in many environments the vast majority of PDU Sessions are eligible for 5GS to EPS interworking. Requiring to add within a PDU Session establishment procedure step 2 (EBI assignment request) and step 7 (EBI assignment response) of section 4.11.1.4.1 of 3GPP TS 23.502 consists in an extra signalling burden. These extra signalling steps should preferably be avoided (in Home routed roaming scenarios and/or in non-roaming LBO roaming scenarios).

One or more of the following aspect propose that, for a PDU session supporting EPS interworking, the AMF may pre-assign one or more EBIs to the PDU session and/or may associate a default ARP received in subscription information during registration for the related S-NSSAI and/or DNN to these EBIs. The AMF includes EBI Information that contains the one or more EBIs and the associated default ARP in the Nsmf_PDUSession_CreateSMContext Request it sends to the SMF to establish the SM Context of the PDU session. This may be done for some or all types of PDU sessions (e.g. home routed roaming PDU sessions, non-roaming PDU sessions and/or local breakout roaming PDU sessions).

For a home route roaming PDU session, the V-SMF forwards the one or more EBIs and associated default ARP to the H-SMF in the Nsmf_PDUSession_Create Request. The H-SMF may return in the Nsmf_PDUSession_Create Response EBI information telling the V-SMF whether these EBIs have been used as allocated by the AMF, revoked and/or used with a modified ARP.

When the one or more EBIs are being revoked or used with a modified ARP, the SMF (e.g. V-SMF for a home routed roaming PDU session) may invoke the EBI Assignment service operation to update the AMF with the EBIs revoked or used with a modified ARP.

If only one EBI is included in the Nsmf_PDUSession_CreateSMContext or Nsmf_PDUSession_Create Request, but the SMF (H-SMF for a home routed roaming PDU session) needs to assign more than one EBI, the SMF may complete first the establishment of the PDU session with one EBI, and then may invoke the AMF EBI Assignment service operation (and Nsmf_PDUSession_Update service operation for a home routed roaming PDU session) to request the allocation of additional EBIs to the PDU session, using existing procedures.

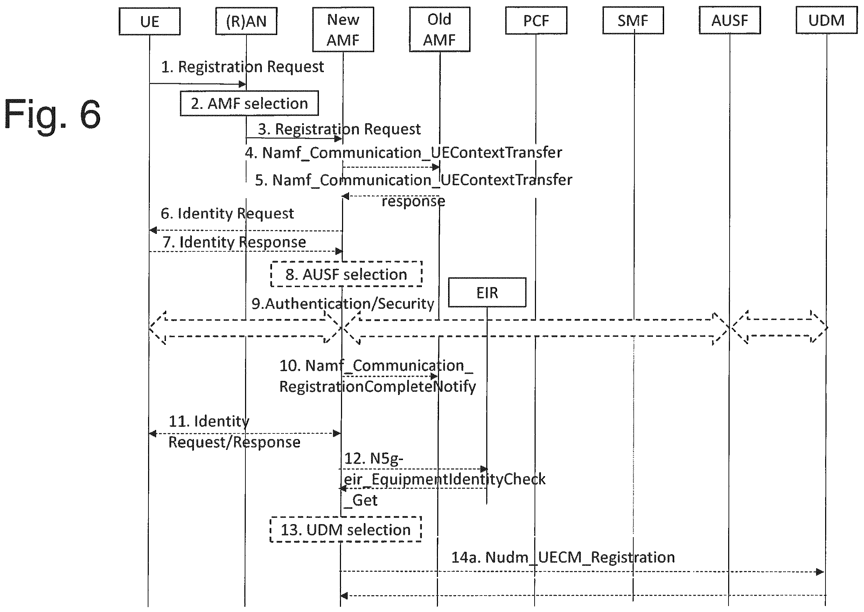

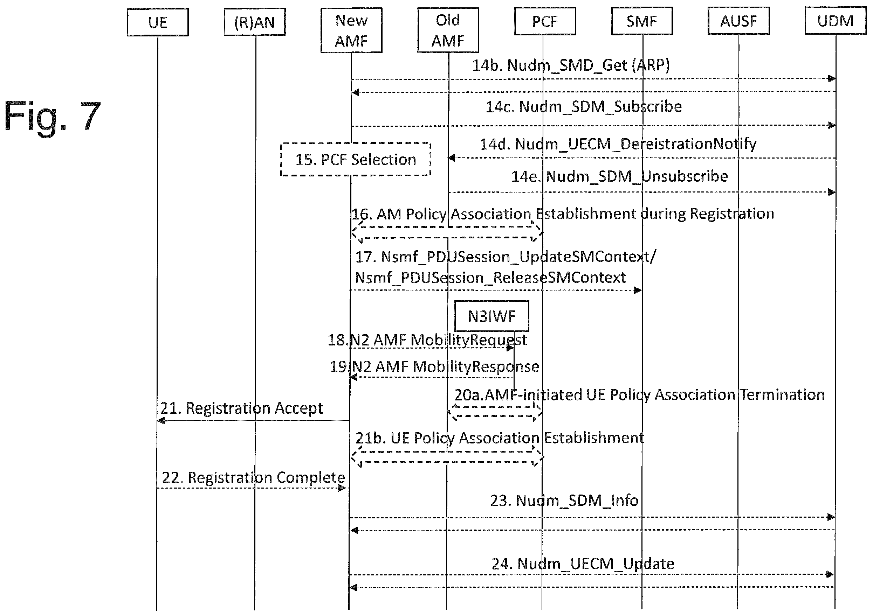

Figures 6 and 7 show a schematic representation of a diagram of a registration procedure according to section 4.2.2.2 of 3GPP TS 23.502. The following steps are discussed in details in section 4.2.2.2 of 3GPP TS 23.502 and therefore are merely listed for the sake of conciseness.

In step 1, a UE may send a registration request to the RAN.

In step 2, the RAN may perform AMF selection. More specifically, the RAN may select a new AMF.

In step 3, the RAN may send a registration request to the new AMF.

In step 4, the new AMF may send an Namf_Communication_UEContextTransfer message to an old AMF.

In step 5, the old AMF may send an Namf_Communication_UEContextTransfer message to the new AMF.

In step 6, the new AMF may send an identity request to the UE.

In step 7, the UE may send an identity response to the new AMF.

In step 8, the new AMF may select an authentication server function AUSF.

In step 9, the new AMF may initiate UE authentication by invoking the selected AUSF.

In step 10, the new AMF may send an Namf_Communication_RegistrationCompleteNotify message to the old AMF.

In step 11, if a permanent equipment identifier has not been already provided by the UE nor retrieved from the old AMF, the new AMF may send an identity request to the UE. The UE may send an identity response to the new AMF.

In step 12, the new AMF may send an N5g-eir_EquipmentldentityCheck_Get message and may perform a permanent equipment identifier check with an equipment identity register (EIR).

In step 13, the new AMF may perform UDM selection.

In step 14a, the new AMF may send a Nudm_UECM_Registration message to the UDM to register with the UDM.

In step 14b, the new AMF may send a Nudm_SDM_Get message to the UDM to retrieve subscription data for the UE.

In step 14c, the new AMF may send a Nudm_SDM_Suscribe message to the UDM to be notified when the subscription data for the UE is modified.

In step 14d, the UDM may send a Nudm_UECM_DeregistrationNotify message to the old AMF to remove the subscription data for the UE.

In step 14e, the old AMF may send Nudm_SDM_Unsubscribe to no longer be notified when the subscription data for the UE is modified.

In step 15, the new AMF may perform PCF selection.

In step 16, the new AMF may perform an access management Policy Association Modification.

In step 17, the new AMF may send an Nsmf_PDUSession_UpdateSMContext message to the SMF to activate one or more user plane connections of one or more PDU Sessions. The new AMF may send an Nsmf_PDUSession_ReleaseSMContext message to the SMF to release any network resources related to the PDU Session.

In step 18, the new AMF may send an AMF Mobility Request to a N3 interworking function (N3IWF).

In step 19, the N3IWF may send an AMF Mobility Response to the new AMF.

In step 20a, the old AMF may perform an AMF-initiated UE Policy Association Termination with the PCF.

In step 21, the new AMF may send a registration accept message to the UE.

In step 21b, the new AMF may perform a UE Policy Association Establishment with the PCF.

In step 22, the UE may send a registration complete message to the new AMF.

In step 23, the new AMF may send an Nudm_SDM_Info to the UDM.

In the above procedure, the AMF may receive the subscription data for the UE in step 14b. This may include the SMF selection subscription data (see section 5.2.2.1 and section 6.1.6.2.5 of 3GPP TS 29.503 or Table 5.2.3.3.1-1 of 3GPP TS 23.502).

One or more aspects supplement this data with a default ARP to use for the PDU session for an S-NSSAI and/or DNN. That is, in step 14b the new AMF may receive the default ARP to use for the PDU session for an S-NSSAI and/or DNN from the UDM. This is in contrast with existing solutions where only the SMF receives the default ARP from the UDM in session management subscription data within the 5gQoSProfile (see sections 6.1.6.2.8 of 3GPP TS 29.571).

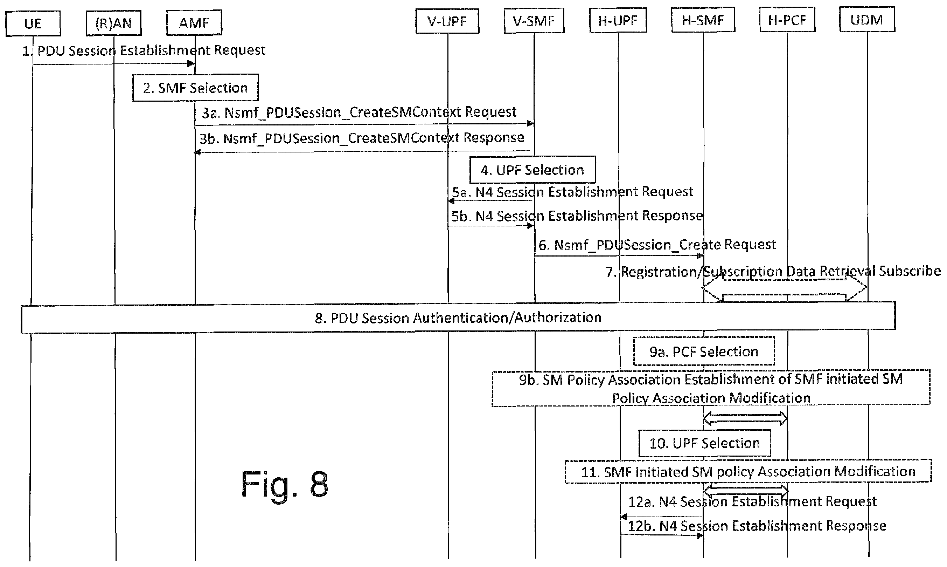

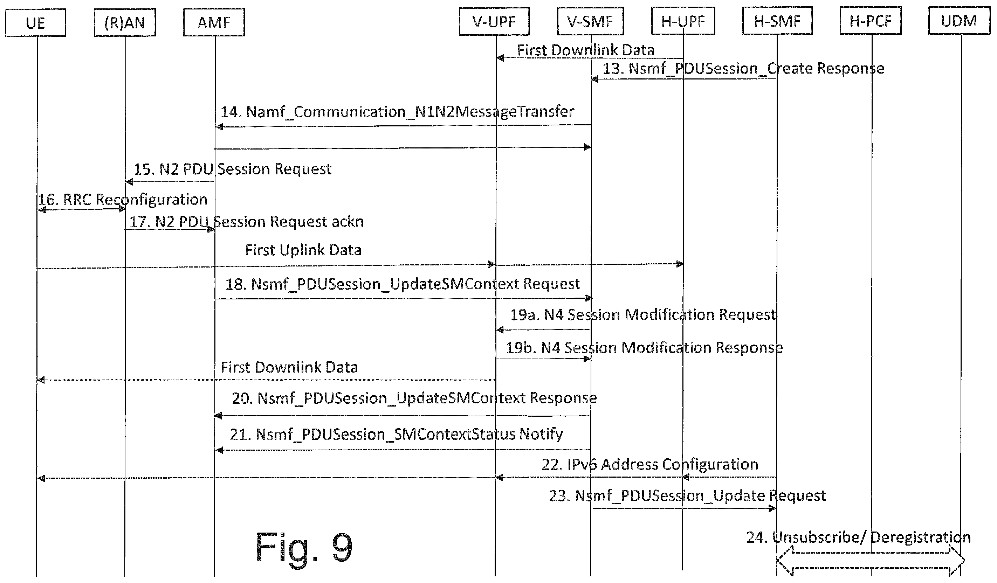

Figures 8 and 9 show a schematic representation of a diagram of data connection establishment procedure for a home routed roaming data connection.

The procedure differs from the procedure of Figures 4 and 5 in that in step 3a for PDU sessions supporting 5GS to EPS interworking (as determined e.g. from the iwkEpsInd subscription information, see section 6.1.6.2.6 of 3GPP TS 29.503 and/or from the UE NAS capabilities), the AMF may pre-assign one or more EBI to the PDU session and/or associate the default ARP received in the subscription information during registration. The AMF includes the one or more EBIs and the default ARP in the Nsmf_PDUSession_CreateSMContext Request.

The procedure differs from the procedure of Figures 4 and 5 also in that in step 6 the V-SMF forwards EBI Information that contains the one or more EBIs and/or default ARP to the H-SMF in the Nsmf_PDUSession_Create Request.

The procedure differs from the procedure of Figures 4 and 5 in that in step 13 the H-SMF may indicate in the Nsmf_PDUSession_Create Response EBI Information indicating whether the one or more EBIs have been used with the default ARP, have been revoked or used with a modified ARP.

This may be done for example by extending the Nsmf_PDUSession_Create Response with one or more of the following information elements (IEs) that are currently defined and used in a H-SMF initiated Update towards the V-SMF:

| | | | | |
|---|---|---|---|---|
| revokeEbiList | array(EpsBearerld) | C | 1..N | This IE shall be present if the H-SMF requests the V-SMF to revoke some EBI(s). |
| | | | | When present, it shall contain the EBIs to revoke. |
| modifiedEbiList | array(EbiArpMapping) | C | 1..N | This IE shall be present if the H-SMF modifies the ARP associated to the EBI(s). Alternatively, if the ARP associated to the pre-assigned EBIs was not signalled in the Request, this IE shall be present if the H-SMF modifies the ARP to a value other than the Default ARP for the S-NSSSAI and DNN. |

The procedure differs from the procedure of Figures 4 and 5 in that in step 13' the V-SMF updates the AMF using the Namf_EBIAssignment service operation (see section 5.2.2.6 of 3GPP TS 29.518), if the H-SMF revoked some EBI(s) or modified the ARP of some EBI(s). This may require this AMF service operation to be extended to support the possibility to signal a modification of the ARP associated to an EBI.

After the PDU session is established, the H-SMF may invoke the Nsmf_PDUSession Update service operation if it needs to request the allocation of additional EBIs to the AMF, using existing procedures (see section 5.2.2.8.3.5 of 3GPP TS 29.502).

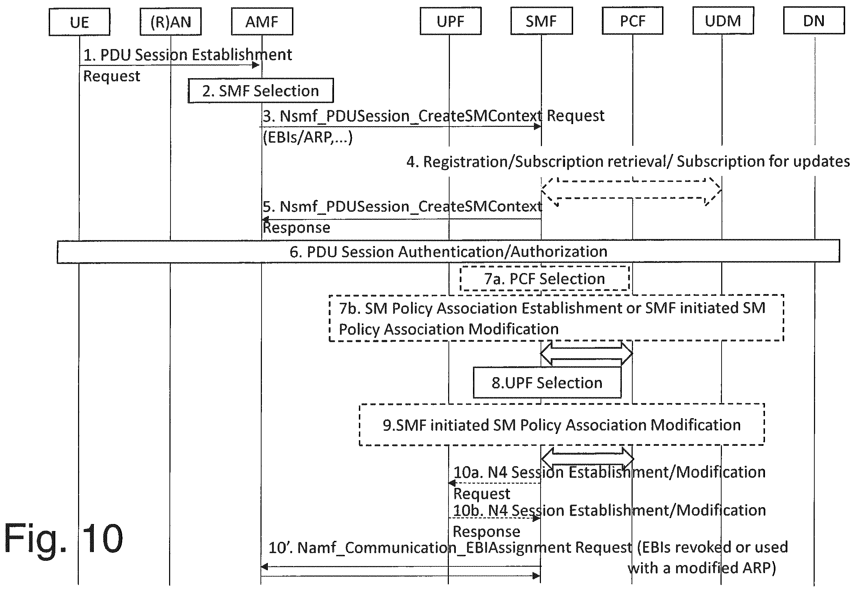

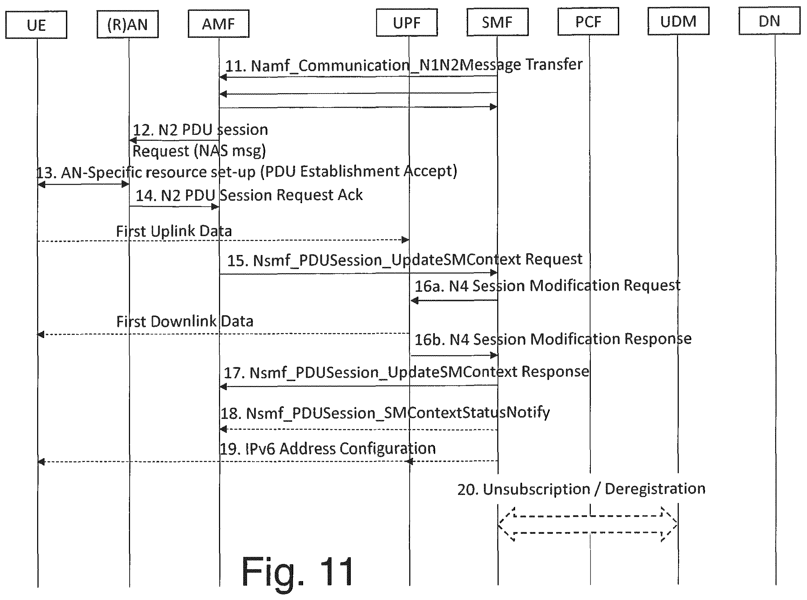

Figures 10 and 11 show a schematic representation of a diagram of data connection establishment procedure for a non-roaming data connection or a roaming local breakout data connection. The following steps are discussed in details in section 4.3.2.2.1 of 3GPP TS 29.502 and therefore are merely listed for the sake of conciseness.

In step 1, a UE may send a PDU Session Establishment Request to an AMF via a RAN.

In step 2, the AMF may select an SMF.

In step 3, the AMF may send an Nsmf_PDUSession_CreateSMContext Request to the SMF.

In step 4, the SMF may retrieve SM subscription data from a DM.

In step 5, the SMF may send an Nsmf_PDUSession_CreateSMContext response to the AMF.

In step 6, the SMF may perform PDU session authentication/authorization.

In step 7, the SMF may select a PCF.

In step 7b, the SMF may perform SM association establishment or SMF initiated SM policy association modification.

In step 8, the SMF may select a UPF.

In step 9, the SMF may perform SMF initiated SM policy association modification.

In step 10a, the SMF may send an N4 Session Establishment Request to the UPF.

In step 10b, the UPF may send an N4 Session Establishment response to the SMF.

In step 11, the SMF may send a Namf_Communication_N1N2MessageTransfer message to the AMF.

In step 12, the AMF may send a N2 PDU session request to the RAN.

In step 13, the UE and the RAN may perform AN-specific resource setup (PDU Session Establishment Accept).

In step 14, the RAN may send an N2 PDU session request acknowledgement to the AMF.

In step 15, the AMF may send an Nsmf_PDUSession_UpdatesSMContext Request to the SMF.

In step 16a, the SMF may send an N4 Session Modification Request to the UPF.

In step 16b, the UPF may send an N4 Session Modification Response to the SMF.

In step 17, the SMF may send an Nsmf_PDUSession_UpdateSMContext Response to the AMF.

In step 18, the SMF may send an Nsmf_PDUSession_SMContextStatusNotify message to the AMF.

In step 19, the SMF may generates an IPv6 Router Advertisement and sends it to the UE via N4 and the UPF.

In step 20, the SMF may unsubscribe to the modifications of session management subscription data for the DNN and the S-NSSAI for the PDU session. The SMF may deregister for the PDU session.

The procedure differs from the procedure of section 4.3.2.2.1 of 3GPP TS 25.502 in that in step 3 for PDU sessions supporting 5GS to EPS interworking (as determined e.g. from the iwkEpsind subscription information, see subclause 6.1.6.2.6 of TS 29.503 and/or from the UE NAS capabilities), the AMF may pre-assign one or more EBI to the PDU session and associate them with the default ARP received in the subscription information during registration. The AMF includes EBI Information that contains the one or more EBIs and the default ARP in the Nsmf_PDUSession_CreateSMContext Request.

The procedure differs from the procedure of Figures 4.3.2.2.1-1 of 3GPP TS 23.502 v5.4.1 in that in step 10' the SMF updates the AMF using the Namf_EBIAssignment service operation (see section 5.2.2.6 of 3GPP TS 29.518), if it needs to revoke some EBI(s) or modify the ARP of some EBI(s). This may require this AMF service operation to be extended to support the possibility to signal a modification of the ARP associated to the one or more EBIs.

After the PDU session is established, the SMF may invoke the Namf_EBIAssignment service operation if it needs to request the allocation of additional EBIs to the AMF, using existing procedures (see section 5.2.2.6 of 3GPP TS 29.518).

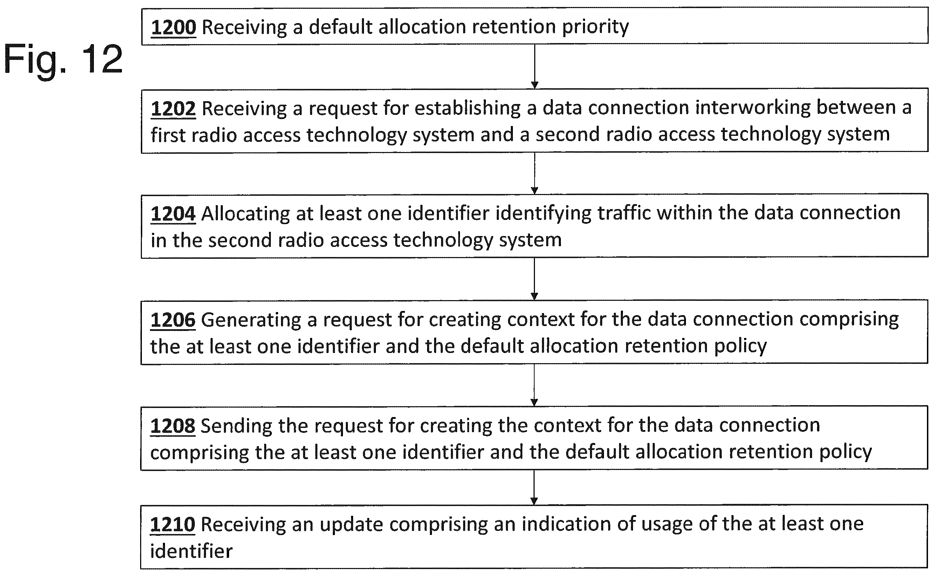

Figure 12 show a schematic representation of a diagram of a method performed between a first function (an AMF) and a second function (an SMF) according to an aspect. The first function (the AMF) is a core network function of a first radio access technology system (5GS). The second function (the SMF) is a core network function of the first radio access technology system (5GS).

In step 1200, the first function (e.g. AMF) may register and receive a default ARP (e.g. see step 14 of Figures 6 and 7).

In step 1202, the first function (the AMF) receives a request for establishing a data connection interworking between the first radio access technology system (5GS) and a second radio access technology system (EPS) (e.g. see step 1 of Figures 8 and 9 or see step 1 of Figures 10 and 11). The request may be received from a UE. The data connection may be a roaming data session, such as a home routed roaming data session or a local breakout roaming data session or a non-roaming data session.

In step 1204, the first function (the AMF) allocates at least one identifier (e.g. EBI) identifying traffic within the data connection in the second radio access technology system (EPS).

In step 1206, the first function (the AMF) generates a request for creating context for the data connection (this is, an Nsmf_PDUSession_CreateSMContext Request) comprising the at least one identifier (e.g. EBI) and/or the default ARP (e.g. see step 3a of Figures 8 and 9 or step 3 of Figures 10 and 11).

In step 1208, the first function (the AMF) sends the request for creating the context for the data connection (the Nsmf_PDUSession_CreateSMContext Request) comprising the at least one identifier and the default ARP to a second function (e.g. SMF) (e.g. see step 3a of Figures 8 and 9 or step 3 of Figures 10 and 11).

In step 1210, the first function (e.g. AMF) may receive an update (e.g. Namf_Communication_EBIAssignment Request) comprising an indication of usage of the at least one identifier (e.g. see step 13' of Figures 8 and 9 or step 10' of Figures 10 and 11). The indication of usage may indicate that the at least one identifier has been used with the associated allocation retention priority, that the at least one identifier has been revoked, that the at least one identifier has been used with an allocation retention priority different from the associated allocation retention priority or other.

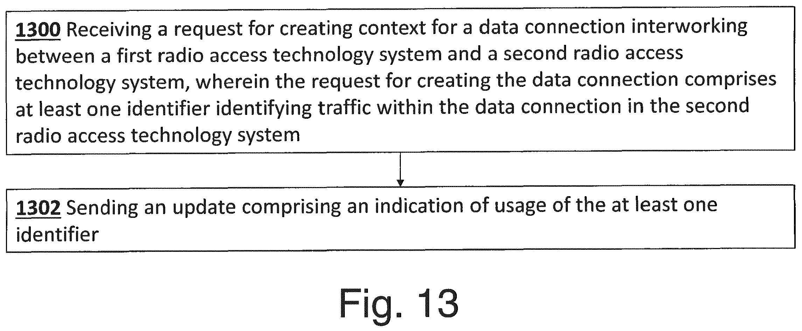

Figure 13 show a schematic representation of a diagram of a method performed between a first function (an AMF) and a second function (an SMF) according to an aspect. The first function (the AMF) may be a core network function of a first radio access technology system (5GS). The second function (the SMF) may be a core network function of the first radio access technology system (5GS).

In step 1300, the second function (the SMF) receives a request for creating context for a data connection (this is, an Nsmf_PDUSession_CreateSMContext Request) interworking between a first radio access technology system (5GS) and a second radio access technology system (EPS), wherein the request for creating the data connection comprises at least one identifier (e.g. EBI) identifying traffic within the data connection in the second radio access technology (EPS) (e.g. see step 3a of Figures 8 and 9 or step 3 of Figures 10 and 11). The data connection may be a roaming data session, such as a home routed roaming data session or a local breakout roaming data session or a non-roaming data session.

In step 1302, the second function (e.g. SMF) may send an update (e.g. Namf_Communication_EBIAssignment Request) comprising an indication of usage of the at least one identifier (e.g. see step 13' of Figures 8 and 9 or step 10' of Figures 10 and 11). The indication of usage may indicate that the at least one identifier has been used with the associated allocation retention priority, that the at least one identifier has been revoked, that the at least one identifier has been used with an allocation retention priority different from the associated allocation retention priority or other.

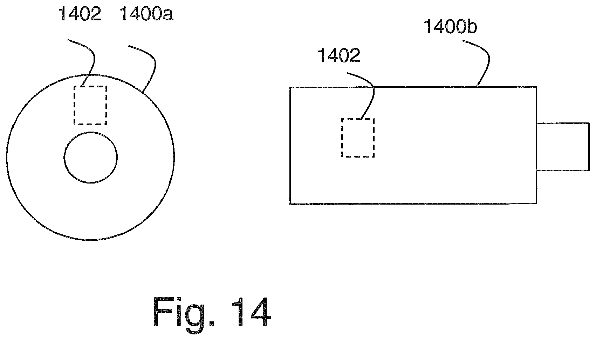

Figure 14 shows a schematic representation of non-volatile memory media 1400a (e.g. computer disc (CD) or digital versatile disc (DVD)) and 1400b (e.g. universal serial bus (USB) memory stick) storing instructions and/or parameters 1402 which when executed by a processor allow the processor to perform one or more of the steps of the methods of Figures 4 to 13.

One or more of the above aspects may present the following advantages.

The stage 2 specification may be corrected and made consistent, also allowing stage 3 protocol implementation, for the allocation of EBIs during a home route roaming PDU session establishment.

Signaling to establish any type of PDU session (home routed roaming PDU session, non-roaming PDU session and local breakout roaming PDU session) may also be reduced by avoiding the need for an extra step for the SMF to request the allocation of EBIs during the PDU session establishment (considering that the most frequent case is that of PDU Sessions eligible to mobility between 5GS and EPS and that thus require allocation of an EBI corresponding to the default Bearer).

Signalling gains may be obtained when the SMF does not need to revoke the pre-assigned EBIs nor to change the ARP associated to the pre-assigned EBIs (which will be the vast majority of cases).

It will be understood that one or more of the above aspects may be incorporated in a modified version of 3GPP TS 23.502, for example by incorporating one or more of the following changes.

### 4.11.1.4.1 EPS bearer ID allocation

Following procedures are updated to allocate EPS bearer ID(s) towards EPS bearer(s) mapped from QoS flow(s) and provide the EPS bearer ID(s) to the NG-RAN:
- UE requested PDU Session Establishment (Non-roaming and Roaming with Local Breakout (clause 4.3.2.2.1).
- UE requested PDU Session Establishment (Home-routed Roaming (clause 4.3.2.2.2).
- UE or network requested PDU Session Modification (non-roaming and roaming with local breakout) (clause 4.3.3.2).
- UE or network requested PDU Session Modification (home-routed roaming) (clause 4.3.3.3).

The UE requested PDU Session Establishment (Non-roaming and Roaming with Local Breakout (clause 4.3.2.2.1) is modified as follows.

3a: For PDU sessions supporting EPS interworking (as determined e.g. from the subscription information, see Interworking with EPS indication received from UDM, see Table 5.2.3.3.1-1 and from the UE NAS capabilities), the AMF pre-assigns one EBI to the PDU session for the Default ARP received in the subscription information (see Table 5.2.3.3.1-1), and includes in the Nsmf_PDUSession_Create SM Context Request EBI information that contains the allocated EBI together with the Default ARP.

10': The SMF updates the AMF using the Namf_EBIAssignment service operation, if the SMF needs to revoke the EBI allocated in step 3a or to modify its associated ARP.

After the PDU session is established, the SMF invokes the Namf_EBIAssignment service operation if it needs to request the AMF for allocation of additional EBIs (see Figure 4.11.1.4.1-1 below).

The UE requested PDU Session Establishment (Home-routed Roaming (clause 4.3.2.2.2) is modified as follows.
3a: same modification as described above for step 3a of the PDU Session Establishment in Non-roaming and Roaming with Local Breakout cases.
6: The V-SMF forwards the received EBI information in the Nsmf_PDUSession_Create Request it sends to the H-SMF.
13: The H-SMF may indicate in the Nsmf_PDUSession_Create Response whether the pre-assigned EBI has been revoked or used with a modified ARP.
13': The V-SMF updates the AMF using the Namf_EBIAssignment service operation, if the H-SMF revoked the EBI or modified its associated ARP.

After the PDU session is established, the H-SMF invokes the Nsmf_PDUSession Update service operation if it needs to request the AMF for allocation of additional EBIs (see Figure 4.11.1.4.1-1 below).

The UE or network requested PDU Session Modification procedure (clause 4.3.3.2 and 4.3.3.3) is modified as follows.

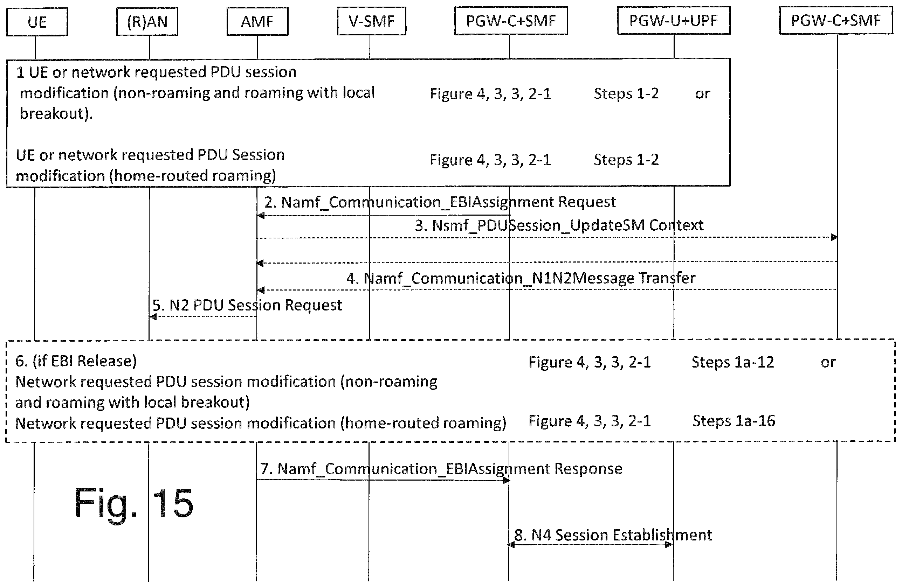

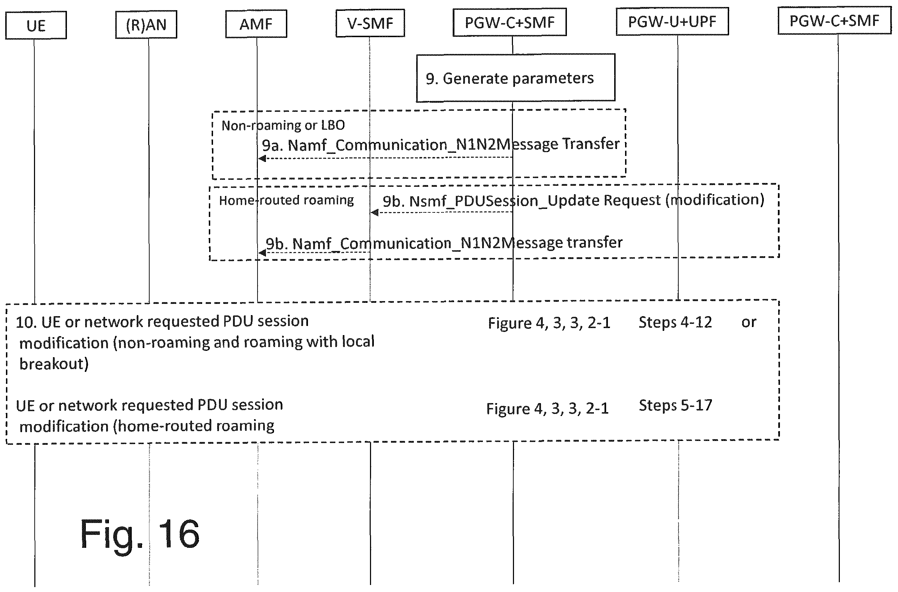

### [see Figures 15 and 16]

### Figure 4.11.1.4.1-1: Procedures for EPS bearer ID allocation (UE or network requested PDU Session Modification)

1. Procedure as listed in this step is initiated as specified in the relevant clauses of this specification. The relevant steps of the procedure as specified in the figure above are executed.
2. If the PGW-C+SMF (or H-SMF in case of home routed case), determines, e.g. based on operator policies, S-NSSAI, User Plane Security Enforcement information, that EPS bearer ID(s) needs to be assigned to the QoS flow(s) in the PDU Session, PGW-C+SMF invokes Namf_Communication_EBIAssignment Request (PDU Session ID, ARP list) (via V-SMF Nsmf_ PDUSession_Update in case of home routed case). When V-SMF receives Nsmf_PDUSession_Update request from H-SMF for EPS bearer ID allocation request, V-SMF needs to invoke Namf_Communication_EBIAssignment Request (PDU Session ID, ARP list). If the PGW-C+SMF (or H-SMF in case of home-routed roaming) serves multiple PDU sessions for the same DNN but different S-NSSAIs for a UE then the SMF shall only request EBIs for PDU sessions served by a common UPF (PSA). In case different UPF (PSA) are serving those PDU sessions, then the SMF chooses one of the UPF (PSA) for this determination based on operator policy.
   Steps 3 to 6 apply only when AMF needs to revoke EBI previously allocated for an UE in order to serve a new SMF request of EBI for the same UE.
3. [Conditional] If the AMF has no available EBIs, the AMF may revoke an EBI that was assigned to QoS flow(s) based on the ARP(s) and S-NSSAI stored during PDU Session establishment, EBIs information in the UE context and local policies. If an assigned EBI is to be revoked, the AMF invokes Nsmf_PDUSession_UpdateSMContext (EBI(s) to be revoked) to request the related SMF (called "SMF serving the released resources") to release the mapped EPS QoS parameters corresponding to the EBI to be revoked. The AMF stores the association of the assigned EBI, ARP pair to the corresponding PDU Session ID and SMF address.
4. The "SMF serving the released resources" that receives the request in step 3 shall invoke Namf_Communication_N1N2Message Transfer (N2 SM information (PDU Session ID, EBI(s) to be revoked), N1 SM container (PDU Session Modification Command (PDU Session ID, EBI(s) to be revoked))) to inform the (R)AN and the UE to remove the mapped EPS QoS parameters corresponding to the EBI(s) to be revoked. In home routed roaming scenario, the H-SMF includes EBI(s) to be revoked to V-SMF to inform V-SMF to remove the mapped EPS bearer context corresponding to the EBI(s) to be revoked.

NOTE 1: The SMF can also decide to remove the QoS flow if it is not acceptable to continue the service when no corresponding EPS QoS parameters can be assigned.

For home routed roaming scenario, the "SMF serving the released resources" sends an N4 Session Modification Request to request the PGW-U+UPF to release N4 Session corresponding to the revoked EBI(s).

In home routed roaming case, the V-SMF starts a VPLMN initiated QoS modification for the PDU Session and the Namf_Communication_N1N2Message Transfer is invoked by the V-SMF based on the corresponding QoS modification message received from H-SMF.

5. If the UE is in CM-CONNECTED state, the AMF sends N2 PDU Session Request (N2 SM information received from SMF, NAS message (PDU Session ID, N1 SM container (PDU Session Modification Command))) Message to the (R)AN.

If the UE is in CM-IDLE state and an ATC is activated, the AMF updates and stores the UE context based on the Namf_Communication_N1N2MessageTransfer and step 5-6 are skipped. When the UE is reachable, e.g. when the UE enters CM-CONNECTED state, the AMF forwards the N1 message to synchronize the UE context with the UE.
6. The rest steps of the procedure are executed as specified in the figure above.
7 If the AMF successfully assigns EBI(s), it responds with the assigned EBI(s). Otherwise, it responds with a cause indicating EBI assignment failure.

If a PDU Session from another SMF already exists towards the same DNN, the AMF either rejects the EBI assignment request, or revokes the EBI(s) from the existing PDU Session(s) to the same DNN but different SMF. The AMF makes the decision based on the operator policy.

The AMF stores the DNN and PGW-C+SMF in which the PDU sesson(s) support EPS interworking to UDM in clause 4.11.1.6.

NOTE 2: The above applies only when the S-NSSAI(s) for the PDU Sessions are different, otherwise the same SMF is selected for PDU Sessions to the same DNN.

8. The PGW-C+SMF sends an N4 Session Establishment/Modification Request to the PGW-U+UPF.

For home routed roaming scenario, if the EBI is assigned successfully, the PGW-C+SMF prepares the CN Tunnel Info for each EPS bearer. If the CN Tunnel info is allocated by the PGW-C+SMF, the PGW-U tunnel info for the EPS bearer may be provided to PGW-U+UPF. If the CN Tunnel info is allocated by PGW-U+UPF, the PGW-U+UPF sends the PGW-U tunnel info for the EPS bearer to the PGW-C+SMF. The PGW-U+UPF is ready to receive uplink packets from E-UTRAN.

NOTE 3: In the home routed roaming scenario the PGW-C+SMF prepares the CN Tunnel Info for each EPS bearer and provide it to V-SMF. Thus when the UE move to EPC network, the V-SMF does not need interact with the PGW-C+SMF to get the EPS bearer context(s).

NOTE 4: If the CN Tunnel info is allocated by the PGW-C+SMF and not provided to PGW-U+UPF at PDU Session establishment, when the UE moves to the target RAT the PGW-U+UPF cannot receive UL data until the PGW-C+SMF has provided the Tunnel Info to the PGW-U+UPF in N4 Session Modification. This causes a short interruption to the UL data during the intersystem handover execution.

9. If the PGW-C+SMF receives any EBI(s) from the AMF, it adds the received EBI(s) into the mapped EPS bearer context(s).

In home routed roaming scenario, the PGW-C+SMF generates EPS bearer context which includes per EPS bearer PGW-U tunnel information. In addition, if the default EPS bearer is generated for the corresponding PDN Connection of PDU Session (i.e. during the PDU Session establishment procedure), the PGW-C+SMF generates the PGW-C tunnel information of the PDN connection and include it in UE EPS PDN connection.

9a. [Conditional] In non-roaming or LBO scenario, the PGW-C+SMF includes the mapped EPS bearer context(s) and the corresponding QoS Flow(s) to be sent to the UE in the N1 SM container. PGW-C+SMF also indicates the mapping between the QoS Flow(s) and mapped EPS bearer context(s) in the N1 SM container. PGW-C+SMF also includes the mapping between the received EBI(s) and QFI(s) into the N2 SM information to be sent to the NG-RAN. The PGW-C+SMF sends the N1 SM container and N2 SM information to AMF via Namf_Communication_N1N2MessageTransfer. 9b [Conditional] In home routed roaming scenario, the PGW-C+SMF sends mapped EPS bearer context(s), the mapping between the received EBI(s) and QFI(s), and EPS bearer context to V-SMF via Nsmf_PDUSession_Create Response in case of PDU Session Establishment, or via Nsmf_PDUSession_Update Request in case of PDU Session Modification. The V-SMF stores the EPS bearer context, and generates N1 SM container and N2 SM information, and forwards them to AMF via Namf_Communication_N1N2MessageTransfer.

10. The N1 SM container and N2 SM information are sent to the UE and NG-RAN respectively. The relevant steps of the procedure as specified in the figure above are executed.

***** Next change *****

### 5.2.3.3.1 General

Subscription data types used in the Nudm_SubscriberDataManagement Service are defined in Table 5.2.3.3.1-1 below.

**Table 5.2.3.3.1-1: UE Subscription data types**

| **Subscription data type** | **Field** | **Description** |
|---|---|---|
| Access and Mobility Subscription data (data needed for UE Registration and Mobility Management) | GPSI List | List of the GPSI (Generic Public Subscription Identifier) used both inside and outside of the 3GPP system to address a 3GPP subscription. |
| | Internal Group ID-list | List of the subscribed internal group(s) that the UE belongs to. |
| | Subscribed-UE-AMBR | The Maximum Aggregated uplink and downlink MBRs to be shared across all Non-GBR QoS Flows according to the subscription of the user. |
| | Subscribed S-NSSAIs | The Network Slices that the UE subscribes to. In the roaming case, it indicates the subscribed Network Slices applicable to the Serving PLMN. |
| | Default S-NSSAIs | The Subscribed S-NSSAIs marked as default S-NSSAI. In the roaming case, only those applicable to the Serving PLMN. |
| | UE Usage Type | As defined in TS 23.501 [2], clause 5.15.7.2. |
| | RAT restriction | 3GPP Radio Access Technology(ies) not allowed the UE to access. |
| | Forbidden area | Defines areas in which the UE is not permitted to initiate any communication with the network. |
| | Service Area Restriction | Indicates Allowed areas in which the UE is permitted to initiate communication with the network, and Non-allowed areas in which the UE and the network are not allowed to initiate Service Request or SM signalling to obtain user services. |
| | Core Network type restriction | Defines whether UE is allowed to connect to 5GC and/or EPC for this PLMN. |
| | RFSP Index | An index to specific RRM configuration in the NG-RAN. |
| | Subscribed Periodic Registration Timer | Indicates a subscribed Periodic Registration Timer value. |
| | MPS priority | Indicates the user is subscribed to MPS as indicated in TS 23.501 [2], clause 5.16.5. |
| | MCX priority | Indicates the user is subscribed to MCX as indicated in TS 23.501 [2], clause 5.16.6. |
| | UE behavioural information / Communication patterns | Information on expected UE movement and communication characteristics. See clause 4.15.6.2 |
| | Steering of Roaming | List of preferred PLMN/access technology combinations or HPLMN indication that no change of the "Operator Controlled PLMN Selector with Access Technology" list stored in the UE is needed (see NOTE 3). |
| | | Optionally includes an indication that the UDM requests an acknowledgement of the reception of this information from the UE. |
| | Network Slicing Subscription Change Indicator | When present, indicates to the serving AMF that the subscription data for network slicing changed and the UE configuration must be updated. |
| | Tracing Requirements | Trace requirements about a UE (e.g. trace reference, address of the Trace Collection Entity, etc.) is defined in TS 32.421 [39]. This information is only sent to AMF in the HPLMN or one of its equivalent PLMN(s). |
| | Inclusion of NSSAI in RRC Connection Establishment Allowed | When present, it is used to indicate that the UE is allowed to include NSSAI in the RRC connection Establishment in clear text for 3GPP access. |
| | Subscribed DNN list | List of the subscribed DNNs for the UE (NOTE 1). Used to determine the list of LADN available to the UE as defined in clause 5.6.5 of TS 23.501 [2]. |
| Slice Selection Subscription data (data needed for Slice Selection as described in clause 4.2.2.2.3 and in clause 4.11.0a.5) | Subscribed S-NSSAIs | The Network Slices that the UE subscribes to. In roaming case, it indicates the subscribed network slices applicable to the serving PLMN. |
| UE context in AMF data | AMF | Allocated AMF for the registered UE. Include AMF address and AMF NF Id. |
| | Access Type | 3GPP or non-3GPP access through this AMF |
| | Homogenous Support of IMS Voice over PS Sessions for AMF | Indicates per UE and AMF if "IMS Voice over PS Sessions" is homogeneously supported in all TAs in the serving AMF or homogeneously not supported, or, support is non-homogeneous/unknown, see clause 5.16.3.3 of TS 23.501 [2]. |
| SMF Selection Subscription data (data needed for SMF Selection as described in clause 6.3.2 of TS 23.501 [2]) | SUPI | Key |
| | **SMF Selection Subscription data contains one or more S-NSSAI level subscription data:** | |
| | S-NSSAI | Indicates the value of the S-NSSAI. |
| | Subscribed DNN list | List of the subscribed DNNs for the UE (NOTE 1). |
| | Default DNN | The default DNN if the UE does not provide a DNN (NOTE 2). |
| | LBO Roaming Information | Indicates whether LBO roaming is allowed per DNN, or per (S-NSSAI, subscribed DNN) |
| | Interworking with EPS indication list | Indicates for which DNN from the Subscribed DNN list interworking is supported. |
| | Default ARP for the PDU Session | The Default ARP for the (DNN, S-NSSAI) |
| UE context in SMF data | SUPI | Key |
| | PDU Session Id(s) | List of PDU Session Id(s) for the UE |
| | **For each PDU Session Id:** | |
| | DNN | DNN for the PDU Session. |
| | SMF | Allocated SMF for the PDU Session. Includes SMF IP Address and SMF NF Id. |
| | PGW-C+SMF FQDN | The S5/S8 PGW-C+SMF FQDN used for interworking with EPS. |
| SMS Management Subscription data (data needed by SMSF for SMSF Registration) | SMS parameters | Indicates SMS parameters subscribed for SMS service such as SMS teleservice, SMS barring list |
| | Trace Requirements | Trace requirements about a UE (e.g. trace reference, address of the Trace Collection Entity, etc.) is defined in TS 32.421 [39]. This information is only sent to a SMSF in HPLMN. |
| SMS Subscription data (data needed in AMF) | SMS Subscription | Indicates subscription to any SMS delivery service over NAS irrespective of access type. |
| | | |
| UE Context in SMSF data | SMSF Information | Indicates SMSF allocated for the UE, including SMSF address and SMSF NF ID. |
| | Access Type | 3GPP or non-3GPP access through this SMSF |
| Session Management Subscription data (data needed for PDU Session Establishment) | GPSI List | List of the GPSI (Generic Public Subscription Identifier) used both inside and outside of the 3GPP system to address a 3GPP subscription. |
| | Internal Group ID-list | List of the subscribed internal group(s) that the UE belongs to. |
| | Trace Requirements | Trace requirements about a UE (e.g. trace reference, address of the Trace Collection Entity, etc...) is defined in TS 32.421 [39]. |
| | | This information is only sent to a SMF in the HPLMN or one of its equivalent PLMN(s). |
| | **Session Management Subscription data contains one or more S-NSSAI level subscription data:** | |
| | S-NSSAI | Indicates the value of the S-NSSAI. |
| | Subscribed DNN list | List of the subscribed DNNs for the S-NSSAI (NOTE 1). |
| | **For each DNN in S-NSSAI level subscription data:** | |
| | DNN | DNN for the PDU Session. |
| | UE Address | Indicates the subscribed static IP address(es) for the IPv4 or IPv6 or IPv4v6 type PDU Sessions accessing the DNN, S-NSSAI. |
| | Allowed PDU Session Types | Indicates the allowed PDU Session Types (IPv4, IPv6, IPv4v6, Ethernet, and Unstructured) for the DNN, S-NSSAI. |
| | Default PDU Session Type | Indicates the default PDU Session Type for the DNN, S-NSSAI. |
| | Allowed SSC modes | Indicates the allowed SSC modes for the DNN, S-NSSAI. |
| | Default SSC mode | Indicate the default SSC mode for the DNN, S-NSSAI. |
| | Interworking with EPS indication | Indicates whether interworking with EPS is supported for this DNN and S-NSSAI. |
| | 5GS Subscribed QoS profile | The QoS Flow level QoS parameter values (5QI and ARP) for the DNN, S-NSSAI (see clause 5.7.2.7 of TS 23.501 [2]). |
| | Charging Characteristics | This information is defined in TS 32.240 [34]; it may e.g. contain information on how to contact the Charging Function. This information, when provided shall override any corresponding predefined information at the SMF |
| | Subscribed-Session-AMBR | The maximum aggregated uplink and downlink MBRs to be shared across all Non-GBR QoS Flows in each PDU Session, which are established for the DNN, S-NSSAI. |
| | Static IP address/prefix | Indicate the static IP address/prefix for the DNN, S-NSSAI. |
| | User Plane Security Policy | Indicates the security policy for integrity protection and encryption for the user plane. |
| Identifier translation | SUPI | Corresponding SUPI for input GPSI |
| | (Optional) MSISDN | Corresponding GPSI (MSISDN) for input GPSI (External Identifier). This is optionally provided for legacy SMS infrastructure not supporting MSISDN-less SMS. The presence of an MSISDN should be interpreted as an indication to the NEF that MSISDN shall be used to identify the UE when sending the SMS to the SMS-SC via T4. |
| Intersystem continuity Context | (DNN, PGW FQDN) list | For each DNN, indicates the PGW-C+SMF which support interworking with EPC. |
| NOTE 1: | The Subscribed DNN list can include a wildcard DNN. | |
| NOTE 2: | The default DNN shall not be a wildcard DNN. | |
| NOTE 3: | The Steering of Roaming information is protected using the mechanisms defined in TS 33.501 [15]. | |

**Table 5.2.3.3.1-2: Group Subscription data types**

| **Subscription data type** | **Field** | **Description** |
|---|---|---|
| Group Identifer translation | External Group Identifier | Identifies external group of UEs that the UE belongs to as defined in TS 23.682 [23] |
| | (Optional) Internal Group Identifier | Identifies internal group of UEs that the UE belongs to as defined in TS 23.501 [2] |
| | SUPI list | Corresponding SUPI list for input External Group Identifier |

At least a mandatory key is required for each Subscription Data Type to identify the corresponding data. Depending on the use case, for some Subscription Data Types it is possible to use one or multiple sub keys to further identify the corresponding data, as defined in Tables 5.2.3.3.1-3 and 5.2.3.3.1-4 below.

**Table 5.2.3.3.1-3: UE Subscription data types keys**

| **Subscription Data Types** | **Data Key** | **Data Sub Key** |
|---|---|---|
| Access and Mobility Subscription data | SUPI | - |
| SMF Selection Subscription data | SUPI | - |
| UE context in SMF data | SUPI | S-NSSAI |
| SMS Management Subscription data | SUPI | - |
| SMS Subscription data | SUPI | |
| UE Context in SMSF data | SUPI | |
| Session Management Subscription data | SUPI | S-NSSAI |
| | | DNN |
| Identifier translation | GPSI | - |
| Slice Selection Subscription data | SUPI | - |
| Intersystem continuity Context | SUPI | DNN |

**Table 5.2.3.3.1-4: Group Subscription data types keys**

| **Subscription Data Types** | **Data Key** | **Data Sub Key** |
|---|---|---|
| Group Identifier translation | External Group Identifier | |

The UDM may also determine the Default Configured NSSAI for a UE, based on the PEI. The UDM generates the Routing Indicator Data for the UEs when new Routing ID Data needs to be delivered to a UE.

***** Next change *****

### 5.2.8.2.5 Nsmf_PDUSession CreateSMContext service operation

**Service operation name:** Nsmf_PDUSession_CreateSMContext.

**Description:** It creates an AMF-SMF association to support a PDU Session.

**Input, Required:** SUPI or PEI, DNN, AMF ID (AMF Instance ID).

**Input, Optional:** PEI, S-NSSAI(s), PDU Session Id, N1 SM container, UE location information, UE Time Zone, AN type, H-SMF identifier/address, list of alternative H-SMF(s) if available, old PDU Session ID (if the AMF also received an old PDU Session ID from the UE as specified in clause 4.3.5.2), Subscription For PDU Session Status Notification, indication that the SUPI has not been authenticated, PCF ID, DNN Selection Mode, UE PDN Connection Context, GPSI, UE presence in LADN service area, GUAMI, backup AMF(s) (if NF Type is AMF), Trace Requirements. Backup AMF(s) sent only once by the AMF to the SMF in its first interaction with the SMF, UE's Routing Indicator or UDM Group ID for the UE, EBI information (that contains the allocated EBI together with the Default ARP).

**Output, Required:** Result Indication.

**Output, Optional:** Cause, PDU Session ID, N2 SM information, N1 SM container, S-NSSAI(s), EBI information (that contains the revoked EBI or the updated ARP).

When the PDU Session is for Emergency services for a UE without USIM, the AMF provides the PEI and not the SUPI as identifier of the UE. When the PDU Session is for Emergency services of an unauthenticated UE with an USIM, the AMF shall provide both the SUPI and the PEI and shall provide an indication that the SUPI has not been authenticated.

See clause 4.3.2.2.1, clause 4.3.2.2.2, clause 4.11.1.2.2 and clause 4.11.1.3.3 for details on the usage of this service operation.

***** Next change *****

### 5.2.8.2.2 Nsmf_PDUSession Create service operation

**Service operation name:** Nsmf_PDUSession_Create.

**Description:** Create a new PDU Session in the H-SMF or create an association with an existing PDN connection in the home PGW-C+SMF.

**Input, Required:** SUPI, V-SMF ID, DNN, V-CN Tunnel Info, addressing information allowing the H-SMF to request the V-SMF to issue further operations about the PDU Session.

**Input, Optional:** S-NSSAI, PCO, Requested PDU Session Type, 5GSM Core Network Capability, Requested SSC mode, PDU Session ID, Number Of Packet Filters, UE location information, subscription get notified of PDU Session status change, PEI, GPSI, AN type, PCF ID, DNN Selection Mode, UE's Routing Indicator or UDM Group ID for the UE, Always-on PDU Session Requested, information provided by V-SMF related to charging in home routed scenario (see TS 32.255 [45]), EBI information (that contains the allocated EBI together with the Default ARP).

**Output, Required:** Result Indication, and if success in addition: QFI(s), QoS Profile(s), Session-AMBR, QoS Rule(s), QoS Flow level QoS parameters if any for the QoS Flow(s) associated with the QoS rule(s), H-CN Tunnel Info, Enable pause of charging indication, Selected PDU Session Type and SSC mode.

**Output, Optional:** PDU Session ID, S-NSSAI, Cause, PCO, UE IP address, IPv6 Prefix allocated to the PDU Session, information needed by V-SMF in case of EPS interworking such as the PDN Connection Type, Reflective QoS Timer, Always-on PDU Session Granted, information provided by H-SMF related to charging in home routed scenario (see TS 32.255 [45]), EBI information (that contains the revoked EBI or the updated ARP).

See clause 4.3.2.2.2, clause 4.11.1.2.2 and clause 4.11.1.3.3 for details on the usage of this service operation.

***** Next change *****

### 5.2.2.2.13 Namf_Communication EBIAssignment service operation

Service operation name: Namf_Communication_EBIAssignment.

Description: The consumer NF uses this service operation to request a bunch of EPS Bearer IDs for a PDU Session, optionally to indicate to the AMF the list of EBI(s) to be released or to indicate ARP relationship with an EBI to be changed.

**Inputs, Required:** SUPI, PDU Session ID,.

**Input, Optional:** ARP list, Released EBI list, new (EBI, ARP) relationship.

**Outputs, Required:** <ARP, Cause> pair.

**Outputs, Optional:** a list of <ARP, EBI> pair.

The consumer NF invokes the Namf_Communication_EBIAssignment service operation when it determines that one or more EPS Bearer IDs are required for EPS QoS mapping for a PDU Session. The ARP list indicates the number of the requested EBIs, and the corresponding ARP. The AMF uses the ARP list (including ARP priority level, the pre-emption capability and the pre-emption vulnerability) and the S-NSSAI to prioritize the EBI request, AMF can revoke the EBI from an ongoing lower priority PDU Session, if the maximum number of EBIs have been reached and a session with a higher priority requests an EBI. The AMF responds the consumer NF with a cause which indicates whether the assignment is successful or not. If the assignment is successful, the AMF provides a list of <ARP, EBI> pair to the consumer NF.

If the consumer NF determines that some EBIs are not needed, the consumer NF indicates the EBI(s) that can be released in the Released EBI list.

It is noted that while the above describes example embodiments, there are several variations and modifications which may be made to the disclosed solution without departing from the scope of the present invention.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figures 4 to 13, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising:
at least one processor; and
at least one memory including computer program code;
the at least one memory and the computer program code configured to, with the at least one processor, cause the apparatus at least to:
receive, by a first function, a request for establishing a data connection supporting interworking between a first radio access technology system and a second radio access technology system;
allocate, by a first function, at least one identifier identifying traffic within the data connection in the second radio access technology system; and
cause, by the first function, the at least one identifier to be sent to a second function; wherein the first radio access technology system is a 5G system;
the second radio access technology is an Evolved packet system;
the at least one identifier is an Evolved packet system bearer identifier;
the first function is an access management function;
the second function is a session management function;
**characterized in that**
the at least one identifier is sent to the second function in a Nsmf_PDUSession_CreateSMContext Request; and/or
the at least one identifier is sent to the second function in a Nsmf_PDUSession_Create Request.

2. The Apparatus of claim 1, wherein the at least one memory and the computer program code is configured to, with the at least one processor, cause the apparatus at least to:
cause, by the first function, the at least one identifier and an associated allocation retention priority to be sent to the second function.

3. The Apparatus of any of claims 1 to 2, wherein the data connection is a non-roaming data connection or a local breakout roaming data connection.

4. The Apparatus of any of claims 1 to 2, wherein the data connection is a home routed roaming data connection.

5. An apparatus comprising:
at least one processor; and
at least one memory including computer program code;
the at least one memory and the computer program code configured to, with the at least one processor, cause the apparatus at least to:
receive, by a second function, at least one identifier identifying traffic within a data connection in a second radio access technology system, the data connection supporting interworking between a first radio access technology system and the second radio access technology system; wherein the first radio access technology system is a 5G system;
the second radio access technology is an Evolved packet system;
the at least one identifier is an Evolved packet system bearer identifier;
the first function is an access management function;
the second function is a session management function;
**characterized in that**
the at least one identifier is sent to the second function in a Nsmf_PDUSession_CreateSMContext Request; and/or
the at least one identifier is sent to the second function in a Nsmf_PDUSession_Create Request.

6. The Apparatus of claim 5, wherein the at least one memory and the computer program code configured to, with the at least one processor, cause the apparatus at least to:
receive, by the second function, the at least one identifier and an associated allocation retention priority.

7. The Apparatus of any of claim 5 or claim 6, wherein the at least one memory and the computer program code is configured to, with the at least one processor, cause the apparatus at least to:
send, by the second function, an indication of usage of the at least one identifier.

8. The Apparatus according to claim 7, wherein the indication of usage of the at least one identifier indicates that the at least one identifier has been used with the associated allocation retention priority.

9. The Apparatus according to claim 7, wherein the indication relating of usage of the at least one traffic identifier indicates that the at least one identifier has been revoked.

10. The Apparatus according to claim 7, wherein the indication relating to the usage of the at least one traffic identifier indicates that the at least one identifier has been used with an allocation retention priority different from the associated allocation retention priority.

11. A method comprising:
receiving (1202), by a first function, a request for establishing a data connection supporting interworking between a first radio access technology system and a second radio access technology system;
allocating (1204), by a first function, at least one identifier identifying traffic within the data connection in the second radio access technology system; and
causing (1208), by the first function, the at least one identifier to be sent to a second function; wherein the first radio access technology system is a 5G system;
the second radio access technology is an Evolved packet system;
the at least one identifier is an Evolved packet system bearer identifier;
the first function is an access management function;
the second function is a session management function;
**characterized in that**
the at least one identifier is sent to the second function in a Nsmf_PDUSession_CreateSMContext Request; and/or
the at least one identifier is sent to the second function in a Nsmf_PDUSession_Create Request.

12. A method comprising:
receiving (1300),
by a second function, at least one identifier identifying traffic within a data connection in a second radio access technology system, the data connection supporting interworking between a first radio access technology system and the second radio access technology system; wherein the first radio access technology system is a 5G system;
the second radio access technology is an Evolved packet system;
the at least one identifier is an Evolved packet system bearer identifier;
the first function is an access management function;
the second function is a session management function;
**characterized in that**
the at least one identifier is sent to the second function in a Nsmf_PDUSession_CreateSMContext Request; and/or
the at least one identifier is sent to the second function in a Nsmf_PDUSession_Create Request.

13. A computer program comprising computer executable instructions which when run on one or more processors perform the steps of the method of claim 11 or claim 12.

## Patentansprüche

1. Vorrichtung, die Folgendes umfasst:
mindestens einen Prozessor und
mindestens einen Speicher, der Computerprogrammcode beinhaltet;
wobei der mindestens eine Speicher und der Computerprogrammcode dazu ausgelegt sind, die Vorrichtung mit dem mindestens einen Prozessor mindestens zu Folgendem zu veranlassen:
Empfangen einer Anforderung zum Aufbauen einer Datenverbindung, die eine Zusammenarbeit zwischen einem ersten Funkzugangstechnologiesystem und einem zweiten Funkzugangstechnologiesystem unterstützt, von einer ersten Funktion;
Zuteilen von mindestens einer Kennung, die einen Verkehr in der Datenverbindung im zweiten Funkzugangstechnologiesystem identifiziert, durch eine erste Funktion und
Veranlassen der mindestens einen Kennung durch die erste Funktion, an eine zweite Funktion gesendet zu werden; wobei das erste Funkzugangstechnologiesystem ein 5G-System ist;
die zweite Funkzugangstechnologie ist ein entwickeltes Paketsystem;
die mindestens eine Kennung ist eine Trägerkennung für ein entwickeltes Paketsystem;
die erste Funktion ist eine Zugangsverwaltungsfunktion;
die zweite Funktion ist eine Sitzungsverwaltungsfunktion;
**dadurch gekennzeichnet, dass**
die mindestens eine Kennung in einer Nsmf_PDUSession_CreateSMContext-Anforderung an die zweite Funktion gesendet wird und/oder
die mindestens eine Kennung in einer Nsmf_PDUSession_Create-Anforderung an die zweite Funktion gesendet wird.

2. Vorrichtung nach Anspruch 1, wobei der mindestens eine Speicher und der Computerprogrammcode dazu ausgelegt ist, die Vorrichtung mit dem mindestens einen Prozessor mindestens zu Folgendem zu veranlassen:
Veranlassen der mindestens einen Kennung und einer verknüpften Zuteilungsrückhaltepriorität, an die zweite Funktion gesendet zu werden, durch die erste Funktion.

3. Vorrichtung nach einem der Ansprüche 1 bis 2, wobei die Datenverbindung eine Nicht-Roaming-Datenverbindung oder eine lokale Breakout-Roaming-Datenverbindung ist.

4. Vorrichtung nach einem der Ansprüche 1 bis 2, wobei die Datenverbindung eine Home-Routed-Roaming-Datenverbindung ist.

5. Vorrichtung, die Folgendes umfasst:
mindestens einen Prozessor und
mindestens einen Speicher, der Computerprogrammcode beinhaltet;
wobei der mindestens eine Speicher und der Computerprogrammcode dazu ausgelegt sind, die Vorrichtung mit dem mindestens einen Prozessor mindestens zu Folgendem zu veranlassen:
Empfangen von mindestens einer Kennung, die einen Verkehr in einer Datenverbindung in einem zweiten Funkzugangstechnologiesystem unterstützt, von einer zweiten Funktion, wobei die Datenverbindung eine Zusammenarbeit zwischen einem ersten Funkzugangstechnologiesystem und den zweiten Funkzugangstechnologiesystem unterstützt, wobei das erste Funkzugangstechnologiesystem ein 5G-System ist;
die zweite Funkzugangstechnologie ist ein entwickeltes Paketsystem;
die mindestens eine Kennung ist eine Trägerkennung für ein entwickeltes Paketsystem;
die erste Funktion ist eine Zugangsverwaltungsfunktion;
die zweite Funktion ist eine Sitzungsverwaltungsfunktion;
**dadurch gekennzeichnet, dass**
die mindestens eine Kennung in einer Nsmf_PDUSession_CreateSMContext-Anforderung an die zweite Funktion gesendet wird und/oder
die mindestens eine Kennung in einer Nsmf_PDUSession_Create-Anforderung an die zweite Funktion gesendet wird.

6. Vorrichtung nach Anspruch 5, wobei der mindestens eine Speicher und der Computerprogrammcode dazu ausgelegt sind, die Vorrichtung mit dem mindestens einen Prozessor mindestens zu Folgendem zu veranlassen:
Empfangen der mindestens einen Kennung und einer Zuteilungsrückhaltepriorität durch die zweite Funktion.

7. Vorrichtung nach einem von Anspruch 5 oder Anspruch 6, wobei der mindestens eine Speicher und der Computerprogrammcode dazu ausgelegt ist, die Vorrichtung mit dem mindestens einen Prozessor mindestens zu Folgendem zu veranlassen:
Senden einer Anzeige zur Nutzung der mindestens einen Kennung durch die zweite Funktion.

8. Vorrichtung nach Anspruch 7, wobei die Anzeige zur Nutzung der mindestens einen Kennung anzeigt, dass die mindestens eine Kennung mit der verknüpften Zuteilungsrückhaltepriorität verwendet wurde.

9. Vorrichtung nach Anspruch 7, wobei die Anzeige, die sich auf eine Nutzung der mindestens einen Kennung bezieht, anzeigt, dass die mindestens eine Kennung aufgehoben wurde.

10. Vorrichtung nach Anspruch 7, wobei die Anzeige, die sich auf die Nutzung der mindestens einen Verkehrskennung bezieht, anzeigt, dass die mindestens eine Kennung mit einer Zuteilungsrückhaltepriorität verwendet wurde, die sich von der verknüpften Zuteilungsrückhaltepriorität unterscheidet.

11. Verfahren, das Folgendes umfasst:
Empfangen (1202) einer Anforderung zum Aufbauen einer Datenverbindung, die eine Zusammenarbeit zwischen einem ersten Funkzugangstechnologiesystem und einem zweiten Funkzugangstechnologiesystem unterstützt, von einer ersten Funktion;
Zuteilen (1204) von mindestens einer Kennung, die einen Verkehr in der Datenverbindung im zweiten Funkzugangstechnologiesystem identifiziert, durch eine erste Funktion und
Veranlassen (1208) der mindestens einen Kennung durch die erste Funktion, an eine zweite Funktion gesendet zu werden; wobei das erste Funkzugangstechnologiesystem ein 5G-System ist;
die zweite Funkzugangstechnologie ist ein entwickeltes Paketsystem;
die mindestens eine Kennung ist eine Trägerkennung für ein entwickeltes Paketsystem;
die erste Funktion ist eine Zugangsverwaltungsfunktion;
die zweite Funktion ist eine Sitzungsverwaltungsfunktion;
**dadurch gekennzeichnet, dass**
die mindestens eine Kennung in einer Nsmf_PDUSession_CreateSMContext-Anforderung an die zweite Funktion gesendet wird und/oder
die mindestens eine Kennung in einer Nsmf_PDUSession_Create-Anforderung an die zweite Funktion gesendet wird.

12. Verfahren, das Folgendes umfasst:
Empfangen (1300) von mindestens einer Kennung, die einen Verkehr in einer Datenverbindung in einem zweiten Funkzugangstechnologiesystem unterstützt, von einer zweiten Funktion, wobei die Datenverbindung eine Zusammenarbeit zwischen einem ersten Funkzugangstechnologiesystem und den zweiten Funkzugangstechnologiesystem unterstützt, wobei das erste Funkzugangstechnologiesystem ein 5G-System ist;
die zweite Funkzugangstechnologie ist ein entwickeltes Paketsystem;
die mindestens eine Kennung ist eine Trägerkennung für ein entwickeltes Paketsystem;
die erste Funktion ist eine Zugangsverwaltungsfunktion;
die zweite Funktion ist eine Sitzungsverwaltungsfunktion;
**dadurch gekennzeichnet, dass**
die mindestens eine Kennung in einer Nsmf_PDUSession_CreateSMContext-Anforderung an die zweite Funktion gesendet wird und/oder
die mindestens eine Kennung in einer Nsmf_PDUSession_Create-Anforderung an die zweite Funktion gesendet wird.

13. Computerprogramm, das computerausführbare Anweisungen umfasst, die, wenn sie auf einem oder mehreren Prozessoren ausgeführt werden, die Schritte des Verfahrens nach Anspruch 11 oder Anspruch 12 durchführen.

## Revendications

1. Appareil comprenant :
au moins un processeur ; et
au moins une mémoire comportant un code de programme informatique ;
l'au moins une mémoire et le code de programme informatique étant configurés pour, avec l'au moins un processeur, amener l'appareil au moins à :
par une première fonction, recevoir une demande d'établissement d'une connexion de données prenant en charge l'interfonctionnement entre un premier système de technologie d'accès radio et un deuxième système de technologie d'accès radio ;
par une première fonction, allouer au moins un identifiant permettant d'identifier le trafic au sein de la connexion de données dans le deuxième système de technologie d'accès radio ; et
par la première fonction, provoquer l'envoi de l'au moins un identifiant à une deuxième fonction ; dans lequel le premier système de technologie d'accès radio est un système 5G ;
la deuxième technologie d'accès radio est un système de paquets évolué ;
l'au moins un identifiant est un identifiant de support de système de paquets évolué ;
la première fonction est une fonction de gestion de l'accès ;
la deuxième fonction est une fonction de gestion de session ;
**caractérisé en ce que**
l'au moins un identifiant est envoyé à la deuxième fonction dans une demande Nsmf_PDUSession_CreateSMContext ; et/ou
l'au moins un identifiant est envoyé à la deuxième fonction dans une demande Nsmf _PDUSession_Create.

2. Appareil selon la revendication 1, dans lequel l'au moins une mémoire et le code de programme informatique sont configurés pour, avec l'au moins un processeur, amener l'appareil au moins à :
par la première fonction, provoquer l'envoi de l'au moins un identifiant et d'une priorité de conservation d'allocation associée à la deuxième fonction.

3. Appareil selon l'une des revendications 1 et 2, dans lequel la connexion de données est une connexion de données non itinérante ou une connexion de données itinérante à rupture locale.

4. Appareil selon l'une des revendications 1 et 2, dans lequel la connexion de données est une connexion de données itinérante acheminée à domicile.

5. Appareil comprenant :
au moins un processeur ; et
au moins une mémoire comportant un code de programme informatique ;
l'au moins une mémoire et le code de programme informatique étant configurés pour, avec l'au moins un processeur, amener l'appareil au moins à :
par une deuxième fonction, recevoir au moins un identifiant permettant d'identifier le trafic au sein d'une connexion de données dans un deuxième système de technologie d'accès radio, la connexion de données prenant en charge l'interfonctionnement entre un premier système de technologie d'accès radio et le deuxième système de technologie d'accès radio ; dans lequel le premier système de technologie d'accès radio est un système 5G ;
la deuxième technologie d'accès radio est un système de paquets évolué ;
l'au moins un identifiant est un identifiant de support de système de paquets évolué ;
la première fonction est une fonction de gestion de l'accès ;
la deuxième fonction est une fonction de gestion de session ;
**caractérisé en ce que**
l'au moins un identifiant est envoyé à la deuxième fonction dans une demande Nsmf_PDUSession_CreateSMContext ; et/ou
l'au moins un identifiant est envoyé à la deuxième fonction dans une demande Nsmf _PDUSession_Create.

6. Appareil selon la revendication 5, dans lequel l'au moins une mémoire et le code de programme informatique sont configurés pour, avec l'au moins un processeur, amener l'appareil au moins à :
par la deuxième fonction, recevoir l'au moins un identifiant et une priorité de conservation d'allocation associée.

7. Appareil selon l'une des revendications 5 ou 6, dans lequel l'au moins une mémoire et le code de programme informatique sont configurés pour, avec l'au moins un processeur, amener l'appareil au moins à :
par la deuxième fonction, envoyer une indication de l'utilisation de l'au moins un identifiant.

8. Appareil selon la revendication 7, dans lequel l'indication de l'utilisation de l'au moins un identifiant indique que l'au moins un identifiant a été utilisé avec la priorité de conservation d'allocation associée.

9. Appareil selon la revendication 7, dans lequel l'indication relative à l'utilisation de l'au moins un identifiant de trafic précise que l'au moins un identifiant a été révoqué.

10. Appareil selon la revendication 7, dans lequel l'indication relative à l'utilisation de l'au moins un identifiant de trafic précise que l'au moins un identifiant a été utilisé avec une priorité de conservation d'allocation différente de la priorité de conservation d'allocation associée.

11. Procédé comprenant les étapes suivantes :
par une première fonction, recevoir (1202) une demande d'établissement d'une connexion de données prenant en charge l'interfonctionnement entre un premier système de technologie d'accès radio et un deuxième système de technologie d'accès radio ;
par une première fonction, allouer (1204) au moins un identifiant permettant d'identifier le trafic au sein de la connexion de données dans le deuxième système de technologie d'accès radio ; et
par la première fonction, provoquer (1208) l'envoi de l'au moins un identifiant à une deuxième fonction ; dans lequel le premier système de technologie d'accès radio est un système 5G ;
la deuxième technologie d'accès radio est un système de paquets évolué ;
l'au moins un identifiant est un identifiant de support de système de paquets évolué ;
la première fonction est une fonction de gestion de l'accès ;
la deuxième fonction est une fonction de gestion de session ;
**caractérisé en ce que**
l'au moins un identifiant est envoyé à la deuxième fonction dans une demande Nsmf_PDUSession_CreateSMContext ; et/ou
l'au moins un identifiant est envoyé à la deuxième fonction dans une demande Nsmf _PDUSession_Create.

12. Procédé comprenant les étapes suivantes :
par une deuxième fonction, recevoir (1300) au moins un identifiant permettant d'identifier un trafic au sein d'une connexion de données dans un deuxième système de technologie d'accès radio, la connexion de données prenant en charge l'interfonctionnement entre un premier système de technologie d'accès radio et le deuxième système de technologie d'accès radio ; dans lequel le premier système de technologie d'accès radio est un système 5G ;
la deuxième technologie d'accès radio est un système de paquets évolué ;
l'au moins un identifiant est un identifiant de support de système de paquets évolué ;
la première fonction est une fonction de gestion de l'accès ;
la deuxième fonction est une fonction de gestion de session ;
**caractérisé en ce que**
l'au moins un identifiant est envoyé à la deuxième fonction dans une demande Nsmf_PDUSession_CreateSMContext ; et/ou
l'au moins un identifiant est envoyé à la deuxième fonction dans une demande Nsmf _PDUSession_Create.

13. Programme informatique comprenant des instructions exécutables par ordinateur qui, lorsqu'elles sont exécutées sur un ou plusieurs processeurs, effectuent les étapes du procédé selon la revendication 11 ou la revendication 12.
